# DEMANDE DE BREVET EUROPEEN

(11) **EP 1 930 146 A1**
(43) Date de publication de la demande: **11.06.2008**
(21) Numéro de dépôt: 07023247.5
(22) Date de dépôt: 30.11.2007
(51) Int. Cl.: B29C 53/56, B29C 70/72, B60B 1/00, B60B 1/04

(54) **Rayon en matière composite pour une roue à rayons**

(30) Priorité: 07.12.2006 FR 0610679
(71) Demandeur: Salomon S.A., 74370 Metz-Tessy (FR)
(72) Inventeur: Michaud, Julien, 74470 Lullin (FR); Mouzin, Olivier, 74210 Montmin (FR); Mercat, Jean-Pierre, 74650 Chavanod (FR)

(57) **Abrégé**

L'invention concerne un rayon pour une roue à rayons présentant un corps effilé prolongé à chacune de ses extrémités par une extrémité d'accrochage, chacune des extrémités ayant un dispositif d'accrochage prévu pour coopérer avec un dispositif complémentaire de la jante et du moyeu.

Le corps effilé comprend un fourreau (15) réalisé dans une matière composite et chaque extrémité d'accrochage est la partie terminale d'un embout (16, 17) encastré dans le fourreau, les embouts (16, 17) sont réalisés dans un métal ayant une densité inférieure à 3 (trois).

L'invention concerne également le procédé de fabrication d'un tel rayon.

## Description

L'invention concerne un rayon en matière composite pour une roue à rayons et son procédé de fabrication. Elle concerne également une roue comprenant au moins un tel rayon.

De façon connue les roues à rayons qui sont utilisées dans le domaine du vélo comprennent une jante périphérique, un moyeu central et des rayons qui relient la jante et le moyeu.

Les rayons sont prévus pour être tendus, et leur tension peut être ajustée à l'aide d'un dispositif de réglage de tension. En règle générale le dispositif de réglage en tension est formé par un système vis / écrou qui est situé entre les zones d'accrochage du rayon à la jante et au moyeu.

Une propriété mécanique importante d'un rayon est sa résistance élastique et sa rigidité en traction. Une autre caractéristique est sa résistance à la fatigue. Egalement son poids et sa résistance à l'air sont des propriétés importantes.

Usuellement les rayons sont réalisés en acier inoxydable. Leur diamètre est généralement de l'ordre de 2 millimètres. Il existe des rayons en acier dont la zone médiane est aplatie en section pour lui donner un profil aérodynamique.

Il existe aussi des rayons réalisés en alliage d'aluminium. Ces rayons ont un diamètre plus important et ils sont plus légers que les rayons en acier du fait de la différence de densité. Un mode de réalisation d'un rayon en aluminium est par exemple décrit dans la demande de brevet EP896886.

On connaît également des rayons en matière composite. Le plus souvent il s'agit de fibres de carbone ou de matière équivalente qui sont noyées dans une matrice de résine. Les matières composites ont un rapport entre le module (E) et la densité (d), E/d qui est très élevé. Ce rapport donne le module spécifique de la matière.

Pour un matériau en fibres de carbone unidirectionnelles + résine époxy, E= 115.000 MPa (MégaPascals) et d=1,55
et par comparaison,
pour l'acier inoxydable E= 190.000 MPa et d= 7,8
pour le titane E= 110.000 MPa et d= 4,55
pour l'aluminium E= 71.000 MPa et d= 2,8.

L'acier, le titane et l'aluminium ont en fait des modules spécifiques relativement proches.

Du fait de son module spécifique élevé, il est possible de réaliser des rayons en carbone qui sont rigides et résistants à la traction sous un volume et un poids réduit. Un rayon en fibres de carbone est également très résistant à la fatigue. De plus on peut facilement mettre en forme la section de ces rayons et en particulier leur donner un profil aérodynamique. Le problème réside toutefois dans leur accrochage à la jante et au moyeu.

Une première technique de construction d'une roue à rayons composites consiste à mouler d'une seule pièce les rayons, le moyeu et la jante, tout au moins en partie, la jante étant elle-même réalisée en matière composite. Un tel mode de construction est décrit dans la demande de brevet US5104199. Ce mode de construction donne de bons résultats, toutefois il faut que la jante elle-même soit en matière composite. En outre, une fois que la roue est construite on ne peut pas ajuster la tension individuelle des rayons, par exemple pour corriger un défaut de voile.

Une autre technique de construction consiste à réaliser un rayon ayant un corps en matière composite et deux embouts rapportés à chacune des extrémités du corps pour réaliser l'accrochage au moyeu et à la jante. Les demandes de brevet WO9113771, US6036281, US5350221, FR2586378, EP165590, JP60080901 décrivent des modes de construction de ce genre. Avec l'addition des embouts il est nécessaire que les embouts et leur liaison avec le corps de rayon soient suffisamment résistants pour supporter toutes les contraintes auxquelles le rayon est soumis, en statique mais aussi en dynamique au cours du cycle de rotation de la roue en charge.

Ainsi, certaines des constructions proposées ont des embouts volumineux, ce qui nuit à la légèreté et l'aérodynamisme du rayon et de la roue. Pour les autres constructions l'étendue de la surface de contact entre le corps en carbone et l'embout n'est pas suffisante pour permettre un assemblage qui présente une résistance suffisante aux efforts de traction et à la fatigue. En outre les embouts sont réalisés en acier ou en titane qui sont des métaux relativement lourds, ce qui va à l'inverse de l'objectif de légèreté recherché avec le carbone.

Egalement, pour ces dispositifs existants, les transitions entre les portions métalliques des embouts et la partie médiane composite sont brutales, ce qui donne lieu à des concentrations de contraintes élevées dans ces zones de transition.

On connaît également un rayon qui présente une âme centrale formée par un fil en acier inoxydable. Les deux extrémités de l'âme sont usinées selon une tête d'accrochage et une extrémité filetée et forment les extrémités d'accrochage du rayon. La partie médiane de l'âme est aplatie et elle est enveloppée dans une gaine profilée en matière composite. Toutefois cette matière composite crée un poids additionnel pour le rayon. Elle améliore la résistance en traction mais n'améliore pas de façon significative la raideur en traction du rayon par unité de masse (280 N/mm/g pour le rayon inox plus fourreau carbone et 250 à 272 N/mm/g pour un rayon Inox seul de longueur [271 mm] ). D'autre part on observe une mauvaise cohésion entre le carbone et l'âme acier. Ceci est du à de faibles surfaces de collage acier-carbone car le fil de base est de petit diamètre (1,8 à 2,2 mm) et même quand ce rayon est frappé, le périmètre des sections transversales à l'axe longitudinal du rayon (qui reflète la zone de contact entre l'acier et le carbone), reste faible (périmètre de 6,28 mm pour un rayon de diamètre 2,2 mm au niveau de sa section circulaire, et périmètre de 8 mm dans la zone médiane aplatie).

Compte tenu de cet art antérieur il existe un besoin pour un rayon amélioré et qui soit notamment très rigide en traction et très résistant à la fatigue, et qui présente en outre une masse plus faible que les rayons existants.

Ce but et d'autres buts qui apparaîtront au cours de la description qui va suivre sont atteints par le rayon de l'invention et son procédé de fabrication.

Le rayon de l'invention est prévu pour une roue à rayon comprenant une jante, un moyeu central et des rayons de liaison présentant un corps effilé prolongé à chacune de ses extrémités par une extrémité d'accrochage, chacune des extrémités ayant un dispositif d'accrochage prévu pour coopérer avec un dispositif complémentaire de la jante et du moyeu. Le corps effilé comprend un fourreau réalisé dans une matière composite et chaque extrémité d'accrochage est la partie terminale d'un embout encastré dans le fourreau, et les embouts sont réalisés dans un métal ayant une densité inférieure à 3 (trois).

Un métal d'une densité inférieure à 3 est un métal léger, par exemple un alliage d'aluminium ou de magnésium. L'utilisation d'un tel métal permet de construire des embouts dont la section est plus importante, pour une masse inférieure ou équivalente à celle d'un embout traditionnel. De ce fait on peut aménager des surfaces de contact avec le fourreau en composite qui ont une étendue plus importante et donc une meilleure tenue. Les embouts eux-mêmes sont plus résistants en torsion du fait d'un diamètre plus important.

Selon le procédé de fabrication d'un rayon comprenant un corps effilé prolongé par deux extrémités d'accrochage, chacune des extrémités ayant un dispositif d'accrochage prévu pour coopérer avec un dispositif complémentaire de la jante et du moyeu, le corps effilé comprenant un fourreau réalisé dans une matière composite, chaque extrémité d'accrochage étant la partie terminale d'un embout encastré dans le fourreau, on forme le fourreau par enroulement d'une nappe de matière composite autour d'une ébauche de rayon, celui-ci ayant dans sa partie médiane une section réalisée par découpe mécanique.

L'invention sera mieux comprise en se référant à la description ci-dessous et aux dessins qui lui sont attachés.
La figure 1 montre une roue à rayons.
La figure 2 représente un rayon réalisé selon un premier mode de mise en oeuvre de l'invention.
La figure 3 montre en vue de côté le rayon de la figure 2.
Les figures 4 et 5 représentent chacune un embout du rayon des figures 2 et 3.
La figure 6 illustre le mode de fabrication du rayon des figures 2 et 3.
La figure 7 montre une partie du moule de cuisson.
Les figures 8 et 9 représentent un rayon selon un autre mode de mise en oeuvre de l'invention, respectivement en vue en plan et de côté.
Les figures 10 à 13 illustrent le mode de fabrication de l'âme du rayon des figures 8 et 9 par matriçage à froid.
La figure 14 illustre le mode de fabrication du rayon des figures 8 et 9.

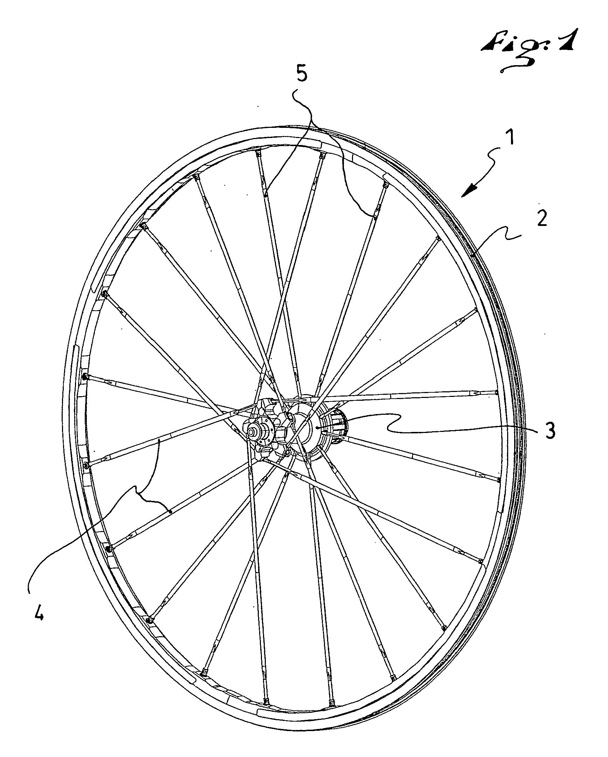

La figure 1 montre une roue à rayon 1. De façon classique la roue 1 comprend une jante périphérique 2, un moyeu central 3 et des rayons de liaison 4 et 5 répartis selon deux nappes qui relient chacune une extrémité du moyeu 3 à la jante. Toute construction appropriée de la jante convient, toute construction appropriée du moyeu convient également. Par exemple, et de façon non limitative, la jante est construite conformément à ce qui est décrit dans la demande de brevet FR2798622 et le moyeu conformément à ce qui est décrit dans la demande FR2882689. La roue représentée est une roue arrière, c'est à dire que les deux nappes de rayons ne sont pas symétriques. De plus une nappe de rayons est formée de rayons croisés et l'autre de rayons radiaux, ceci n'est pas limitatif. L'invention s'applique également à une roue avant ayant des nappes de rayons symétriques, et aussi à tout mode de rayonnage. Les rayons 4 et 5 représentés sont des rayons droits, c'est à dire qu'au niveau du moyeu la tête de rayon est dans le prolongement du corps, sans former de coude. Ceci est un mode de construction préféré, mais non limitatif et l'invention s'applique aussi aux rayons dits coudés, ou à d'autres modes d'assemblage du rayon, le moyeu étant construit en conséquence.

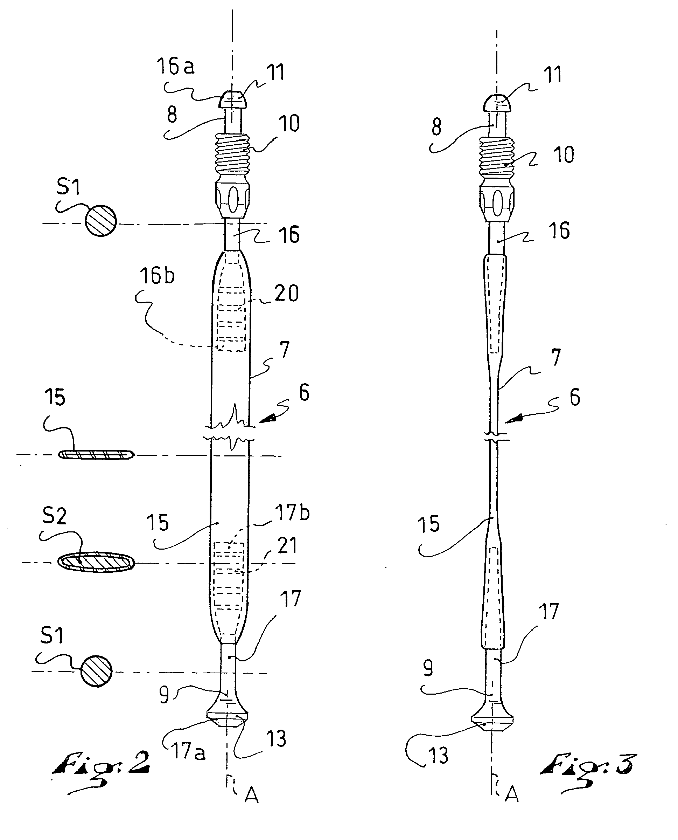

Les figures 2 et 3 représentent un rayon 6 réalisé selon un premier mode de mise en oeuvre de l'invention.

Le rayon 6 présente de façon connue un corps médian 7 effilé, prolongé à chacune de ses extrémités par une extrémité d'accrochage 8, 9. Les extrémités d'accrochage sont équipées d'un dispositif d'accrochage qui est prévu pour coopérer avec le dispositif complémentaire de la jante et du moyeu. Pour le mode de réalisation illustré le dispositif d'accrochage sur la jante comprend, pour l'extrémité 8, une vis creuse 10 qui est enfilée sur l'extrémité 8 et qui est retenue par une tête élargie 11 du rayon. Ce dispositif d'accrochage est déjà connu en soi et il ne sera pas décrit plus en détail. La vis 10 permet d'ajuster la tension du rayon. Tout autre dispositif d'accrochage peut aussi convenir pourvu qu'il soit adapté à celui de la jante.

A l'autre extrémité 9, le dispositif d'accrochage est formé par une tête élargie 13 qui est prévue pour retenir le rayon dans un logement approprié du moyeu (non représenté sur le dessin). Ce dispositif d'accrochage est également connu, et tout autre dispositif approprié peut aussi convenir. On peut aussi construire le rayon 6 avec le dispositif de réglage de tension situé vers le moyeu, et un accrochage simple vers la jante.

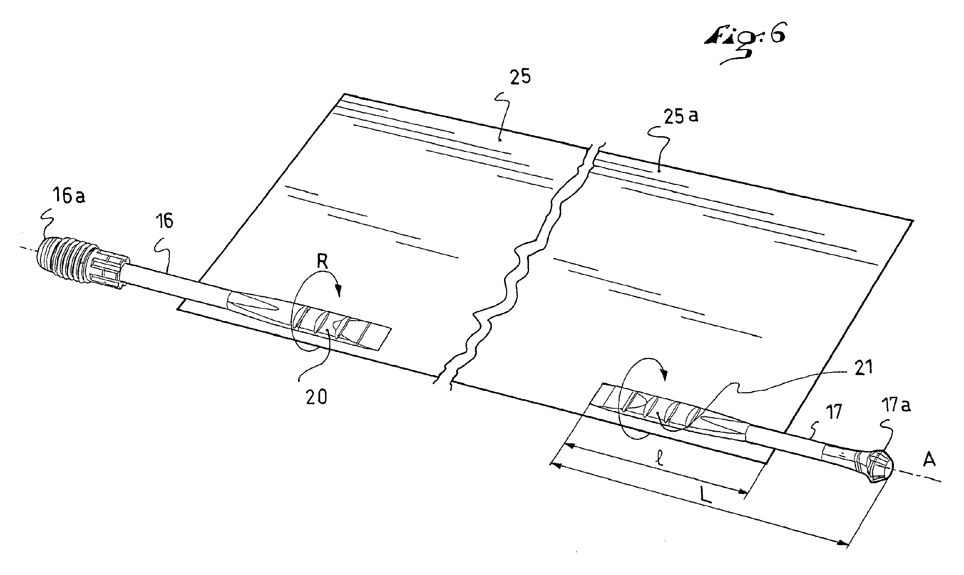

Le corps 7 est formé principalement par un fourreau 15 constitué à partir d'une nappe en matière composite 25 ainsi qu'on le verra plus loin et qui s'étend sur la plus grande partie de sa longueur. La matière composite 25 est par exemple constituée par des fibres 25a de carbone, d'aramide ou autre matière équivalente, noyées dans une matrice de résine qui a été polymérisée. La résine peut être de type polyester, époxy ou tout autre type approprié. De préférence les fibres 25a sont unidirectionnelles (cf. figure 6) et elles sont orientées selon la direction longitudinale A du corps. On peut aussi utiliser des fibres croisées.

Les extrémités d'accrochage 8 et 9 sont les parties terminales d'un embout, respectivement 16 et 17 dont une partie non visible est encastrée dans le fourreau. Pour ce mode de réalisation les embouts 16, 17 sont disjoints, c'est à dire qu'ils sont reliés seulement par le fourreau en matière composite.

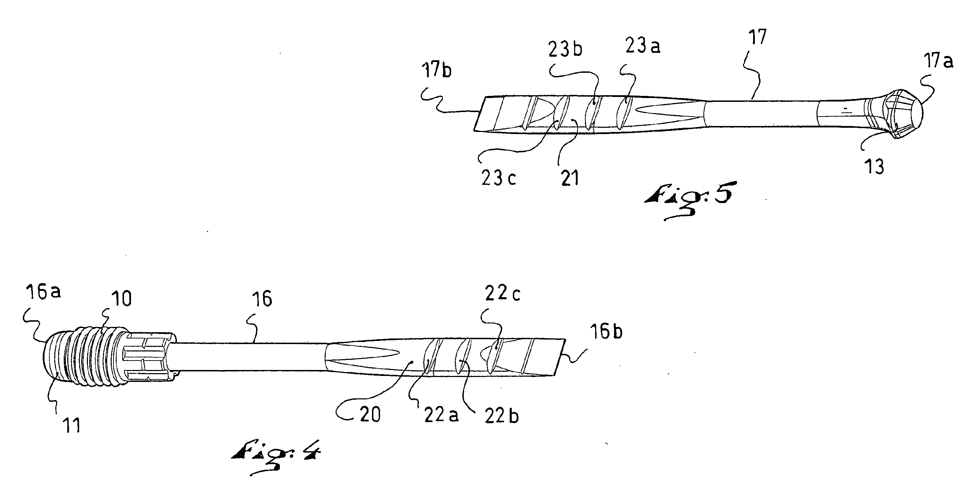

Les figures 4 et 5 montrent en perspective les deux embouts 16 et 17. Ces embouts sont métalliques, et ils sont réalisés dans un métal léger, c'est à dire un métal dont la densité est inférieure à 3. La densité considérée ici est la densité relativement à l'eau, c'est à dire le rapport entre les masses volumiques du métal et de l'eau.

Par exemple les embouts sont réalisés en alliage d'aluminium ou de magnésium. De façon connue, la densité de l'aluminium est égale à 2,7. On peut utiliser un alliage d'aluminium de la série 7000, 2000 ou 6000 traité thermiquement après mise en forme pour améliorer les propriétés mécaniques. Egalement on peut utiliser un alliage de magnésium, la densité du magnésium étant égale à 1,7. D'autres métaux ou alliages métalliques peuvent aussi convenir.

L'idée générale de l'invention est ici d'utiliser un métal léger pour réaliser les embouts. De façon connue, un alliage d'aluminium à l'état brut est relativement ductile et malléable. La mise en forme de l'embout est donc facile à réaliser. Des traitements thermiques sont aussi connus pour améliorer les propriétés mécaniques après mise en forme, de tels traitements sont par exemple décrit dans la demande de brevet EP896886 déjà citée.

De plus, l'utilisation d'un métal léger permet pour une même masse ou une masse inférieure de réaliser un embout dont les dimensions en section sont supérieures à celles par exemple d'un embout traditionnel en acier. Comme la section est plus importante, la surface de contact avec la matière composite est plus étendue, et donc la liaison avec le fourreau peut être rendue plus résistante. La résistance à la torsion et la traction est également améliorée.

On peut réaliser de cette façon des embouts et des rayons plus légers ayant des propriétés mécaniques équivalentes ou supérieures aux embouts et rayons existants.

A titre de comparaison, on a obtenu de bons résultats avec des embouts réalisés à partir d'un fil en alliage d'aluminium de 3,17 millimètres de diamètre, c'est à dire dont le périmètre de section et le diamètre sont augmentés de plus de 50% par rapport à un fil en inox de 2 millimètres de diamètre.

Avec un fil de 3,17 millimètres de diamètre, la surface de contact pour le collage avec le fourreau 15 au niveau de chaque section transversale, présente un périmètre supérieur à 10 millimètres. De préférence, on détermine la géométrie de l'embout 16, 17 de façon que le périmètre de la surface de contact au niveau de chaque section transversale soit supérieur à cette valeur de 10 millimètres au moins pour la portion de l'embout qui est encastrée dans le fourreau 15.

On sait aussi que la surface d'un alliage d'aluminium se prête bien à un assemblage avec une matière composite au moyen de la résine de la matrice, d'une colle ou le cas échéant d'un film de collage intermédiaire.

Ainsi, les embouts 16 et 17 représentés dans les figures 4 et 5 sont réalisés à partir d'un fil en alliage d'aluminium.

Le fil de section circulaire S1 (cf. figure 2) a été découpé en segments, par exemple par une opération mécanique de sciage ou de découpe, par exemple par un dispositif à guillotine pour former chaque embout 16, 17. Une première extrémité, respectivement 16a, 17a de chaque segment ou embout 16, 17 a été mise en forme pour former les têtes 11 et 13, également une vis creuse 10 a été enfilée sur le segment qui est appelé à devenir l'embout 16. La seconde extrémité, respectivement 16b, 17b de chaque segment ou embout 16, 17 a été écrasée pour former une sorte de palette de section transversale S2, respectivement 20, 21 dont l'épaisseur décroît et la largeur augmente progressivement en direction de l'extrémité, respectivement 16b, 17b de l'embout. Les palettes 20, 21 sont situées dans la portion des embouts 16, 17 qui est encastrée dans le fourreau 15. Elles ont notamment pour but d'augmenter le périmètre de la surface de contact avec le fourreau 15. De préférence, également, chacune des palettes 20, 21 est creusée avec une pluralité de stries transversales, comme les stries 22a, 22b, 22c pour la palette 20, et 23a, 23b, 23c pour la palette 21. Ces stries forment un relief de retenue pour la colle ou résine de la matière composite. Elles peuvent être réalisées de différentes manières par exemple par sablage, moletage.....etc. Les palettes avec leurs stries sont un mode de réalisation préféré, mais non limitatif. La mise en forme des palettes est facile à réaliser du fait de la matière de l'embout. Egalement, les palettes peuvent présenter à leur extrémité une épaisseur très fine, de façon à assurer une variation continue et progressive de la section du rayon. Une telle mise en forme serait beaucoup plus difficile à réaliser avec un embout en acier.

On a obtenu des résultats satisfaisants avec un embout réalisé dans un alliage 7075 à partir d'un fil de 3,17 millimètres. La longueur de l'embout 16, 17 est de 80 millimètres, celle de la palette 20, 21 est comprise entre 25 et 40 millimètres, la largeur maximale de la palette est de 5,5 millimètres, et son épaisseur minimale 0,5 millimètres. Ces chiffres ont une valeur seulement indicative.

Une fois mis en forme, les embouts peuvent subir un traitement thermique connu dans le but d'améliorer leurs propriétés mécaniques propres.

La figure 6 illustre le mode de fabrication du rayon à partir des embouts 16, 17. Les deux embouts 16 et 17 sont posés à plat sur une nappe découpée 25 de matière composite constituée de fibres unidirectionnelles 25a et dé résine, dont la résine n'est pas polymérisée, tout au moins pas totalement polymérisée. Les embouts 16, 17 sont placés dans l'alignement l'un de l'autre, avec chacune des palettes 20, 21 orientée selon un même plan. Eventuellement on peut prévoir un film de colle intermédiaire dans la zone des palettes pour renforcer l'adhérence avec la nappe. De préférence, la résine de la nappe se trouve dans un état que l'on qualifie de "pégueux", c'est à dire qui colle au toucher, mais sans couler. La distance qui sépare les extrémités 16a, 17a des deux embouts est sensiblement égale à la longueur finale du rayon. La longueur de la nappe 25 est déterminée pour couvrir la zone de chacune des palettes 20, 21 et pour remonter le long de chaque embout 16, 17 en direction de la tête élargie 11, 13, afin de réaliser un encastrement de l'embout dans le fourreau 15 sur une longueur I, voisine de la moitié ou plus de la longueur L de l'embout. La largeur de la nappe est déterminée pour pouvoir réaliser plusieurs enroulements de la nappe 25 autour des embouts. A titre indicatif on a obtenu des résultats satisfaisants avec une nappe enroulée selon 1 à 3 tours autour des embouts, suivant le type de drapage utilisé (c'est-à-dire avec fibres unidirectionnelles et / ou croisées).

Une fois que les embouts sont en place comme le représente la figure 6, l'ensemble est roulé sur lui-même comme on fait avec du papier à cigarette (cf flèche R). Les deux embouts 16, 17 posés sur la nappe forment à eux deux une ébauche de rayon dont la section dans la partie médiane est réduite à néant du fait de la découpe des embouts selon des segments.

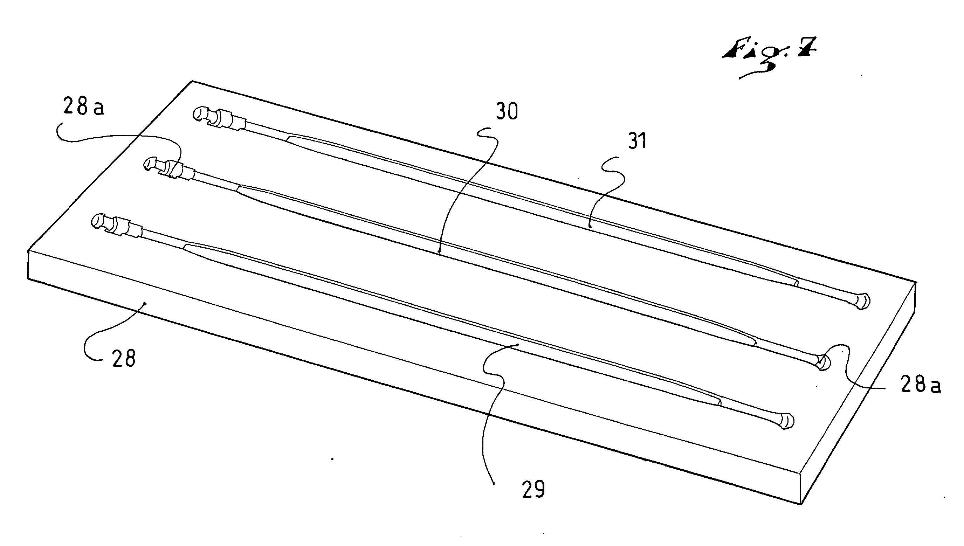

Ensuite le rayon est placé dans un moule de cuisson pour réaliser la cuisson de la résine. Toute construction appropriée du moule convient. Par exemple le moule a des coquilles comme la coquille 28 représentée en figure 7. La coquille peut présenter plusieurs empreintes comme les empreintes 29, 30 et 31 pour cuire simultanément plusieurs rayons.

Les embouts 16 et 17 sont logés dans des formes ajustées 28a des empreintes 29, 30, 31 de moule de façon que leur écartement soit bien défini lors de la cuisson de la résine.

Ainsi la longueur finale du rayon est déterminée avec précision lors de la cuisson de la résine. Pour le reste, la forme des empreintes 29, 30, 31 des coquilles complémentaires du moule applique les enroulements de la nappe contre les embouts, et les écrase sur eux-mêmes dans la zone située entre les embouts.

Les paramètres de la cuisson dépendent de la nature de la résine. L'homme du métier est à même de les déterminer par lui-même.

Un fois la cuisson réalisée, le rayon peut subir une ou plusieurs opérations de finition, et notamment un ébarbage du fourreau dans la zone du plan de joint du moule.

Le rayon fini est particulièrement léger avec son corps réalisé en matière composite sur une grande partie de sa longueur. Sa longueur est définie avec précision lors de sa cuisson dans le moule. Sa section aplatie lui donne un profil aérodynamique. A titre indicatif on a réalisé de cette façon un rayon dont l'épaisseur est de 2 millimètres sur la plus grande partie de la longueur du fourreau. La matière composite du fourreau et la faible section de l'âme (réalisée avec un matériau de densité inférieure à 3) induisent une meilleure résistance en traction et une raideur en traction du rayon par unité de masse supérieure à 290 N/mm/g (240 N/mm/g pour un rayon aluminium de diamètre 3,17 mm et de longueur identique [271 mm] ). La discontinuité du fil de gros diamètre (embouts) entre les deux extrémités du rayon réduit certes la résistance en torsion de ce dernier, même si le fourreau carbone fait la liaison entre ces deux extrémités. Cette résistance en torsion peut cependant être améliorée en combinant aux fibres axiales des fibres de carbone faisant un angle de 10° à 45° avec l'axe du rayon. On mettra ces fibres inclinées de préférence sur la peau extérieure du fourreau. Par ailleurs on peut également réaliser localement un méplat sur l'embout 16, du côté de la vis creuse 10 pour permettre un accouplement avec un outil et bloquer le rayon lors de la mise sous tension du rayon par rotation de la vis creuse 10, ce qui résout le problème évoqué ci-avant. Ceci est toutefois facultatif si le coefficient de frottement entre la tête du rayon 11 et la vis creuse 10 est réduit grâce à un revêtement Téflon ou autre. La liaison entre les embouts et le fourreau est également plus résistante du fait d'une augmentation de l'étendue de la surface de contact due à l'utilisation d'un métal léger, et aussi à sa mise en forme et de ses grandes dimensions par rapport à un rayon en fil d'acier normal. Enfin, la section du rayon est évolutive en particulier dans les zones de transition entre les portions métalliques et le fourreau. En particulier la section des embouts 16, 17 varie progressivement, et avec les palettes 20, 21 elle diminue progressivement en laissant la place à la matière composite. Il n'y a donc pas ou peu d'effet d'escalier entre les différentes matières.

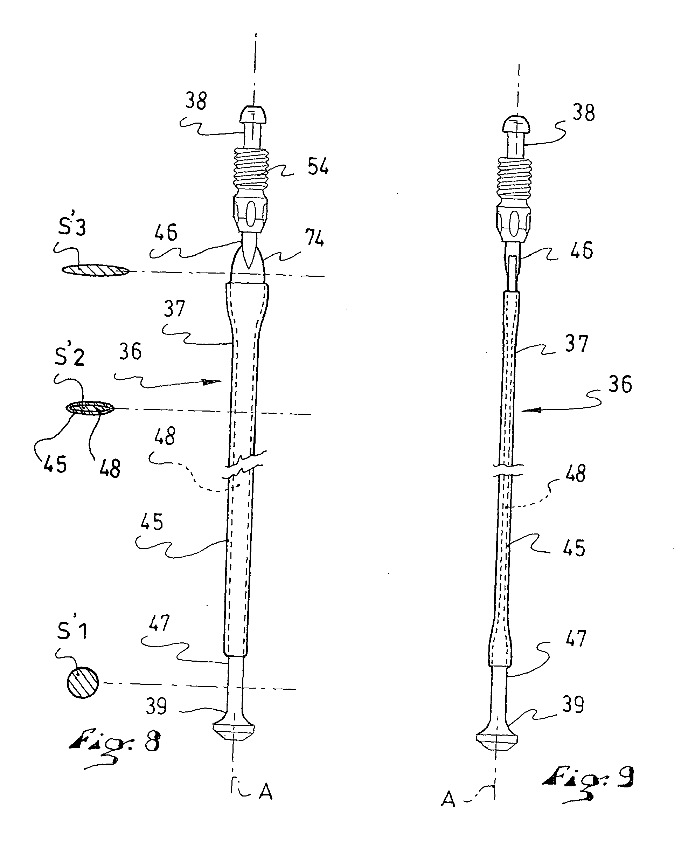

Les figures 8 et 9 sont relatives à un autre mode de mise en oeuvre de l'invention. Elles représentent un rayon 36 qui a sensiblement le même aspect extérieur que le rayon 6 précédent. Le rayon 36 a un corps 37 qui est formé sur une grande partie de la longueur par un fourreau en matière composite 45, et deux extrémités d'accrochage 38 et 39.

Comme précédemment, le fourreau 45 est de préférence formé par des fibres de carbone unidirectionnelles 45a orientées selon la direction longitudinale A définie par le corps. Les fibres sont enrobées de résine durcie par polymérisation. D'autres modes de construction du fourreau conviennent également. Par exemple le fourreau peut être réalisé à partir d'un tissu de fibres de carbone bidirectionnelles, croisées ou autre.

Les extrémités d'accrochage du rayon 36 sont constituées chacune par l'extrémité terminale d'un embout 46, 47 dont une partie non visible est encastrée dans le fourreau 45. Comme précédemment, de préférence, les portions encastrées des embouts 46, 47 ont une surface de contact avec le fourreau dont le périmètre en section transversale est supérieur à 10 millimètres.

Et contrairement au cas précédent, les embouts 46 et 47 sont réunis ici par une âme 48 de section très réduite qui s'étend à l'intérieur du fourreau. De préférence, les embouts 46, 47 et l'âme forment un ensemble continu, c'est à dire réalisé d'une seule pièce. L'âme 48 forme une armature interne pour le fourreau et rend le rayon moins vulnérable aux chocs. L'âme 48 présente une section aplatie réduite de plus de 50% par rapport à celle des embouts, et de préférence réduite de l'ordre de 70%. C'est à dire qu'à elle seule l'âme 48 ne peut pas supporter la tension à laquelle le rayon est soumis. En d'autres termes on enlève plus de 50% de matière ce qui allège d'autant le rayon.

Les deux embouts 46, 47 et l'âme 48 de liaison forment une ébauche 70 en matière métallique. Comme décrit précédemment, cette ébauche est réalisée dans un métal léger dont la densité est inférieure à 3. Notamment la matière est un alliage d'aluminium de la série 7000, 2000 ou 6000, et par exemple un alliage de type 7075 dont les propriétés mécaniques sont améliorées par un traitement thermique.

De préférence, la section transversale de l'ébauche 70 varie de façon progressive, en particulier dans la zone de transition entre chaque embout 46, 47 et l'âme 48, afin d'éviter un effet d'escalier. En outre, l'âme 48 de section aplatie augmente de façon significative la surface de contact entre les embouts et le fourreau, de ce fait il n'est pas nécessaire ici de former des palettes dans les portions encastrées des embouts.

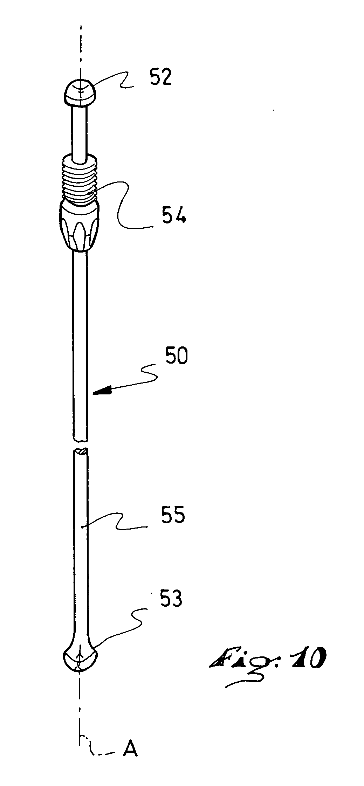

Les figures 10 à 13 illustrent un mode de réalisation de l'ébauche métallique dans le cas du rayon des figures 8 et 9. Une ébauche brute 50 est représentée dans la figure 10. Cette ébauche brute est formée à partir d'un fil en alliage d'aluminium après tréfilage et recuit, découpé selon des segments. Le diamètre du fil est 3,17 millimètres environ (cf. section S'1). Les deux têtes 52 et 53 sont mises en forme aux extrémités du segment, après avoir enfilé la vis creuse 54 du dispositif de mise sous tension. Entre les deux têtes, l'ébauche brute présente une portion médiane 55 de section constante.

L'ébauche est ensuite mise en forme dans une matrice. Les matrices comprennent deux coquilles 56, 57. Chacune des coquilles a trois alvéoles, une alvéole médiane de matriçage, respectivement 56a et 57a dont la forme correspond à celle de l'âme 48 de section réduite, et de chaque côté une alvéole de dégagement, respectivement 56b, 56c et 57b, 57c de forme demi-cylindrique de section beaucoup moins importante. A la fermeture du moule les alvéoles de matriçage 56a et 57a forment une chambre de matriçage qui donne sa forme finale à la portion médiane 55 de l'ébauche, et en particulier à la portion qui deviendra l'âme 48 à section réduite. Les alvéoles 56a, 57a sont donc prévues pour comprimer la portion 55 de l'ébauche 50 et réduire sa section en faisant fluer la matière latéralement.

Les alvéoles de dégagement 56b, 56c, 57b, 57c forment des chambres de dégagement. Les chambres de dégagement ont une section circulaire, et elles renferment chacune un couteau rotatif, respectivement 60, 61. Chaque couteau comporte une saignée ouverte 60a, 61a qui débouche en direction de la chambre de matriçage.

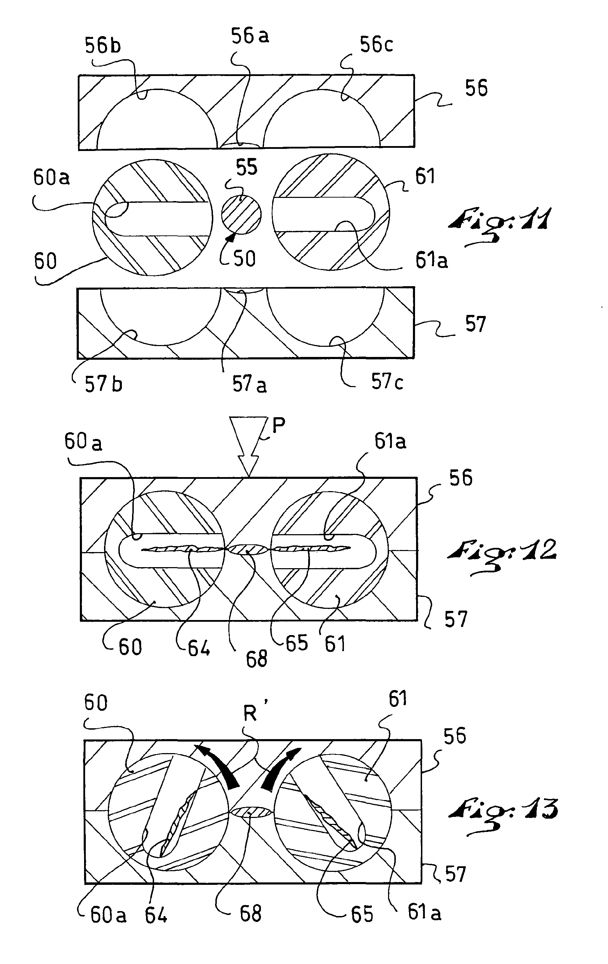

A la fermeture du moule l'ébauche est pressée à froid sous une pression P par les alvéoles 56a, 57a. La matière qui flue latéralement forme des bavures latérales 64, 65 qui pénètrent dans les saignées 60a, 61a des couteaux 60 et 61. Cette phase est illustrée dans la figure 12.

Ensuite, on fait pivoter les deux couteaux 60 et 61 selon la flèche R' pour découper et recueillir les bavures latérales 64, 65 dans les saignées des couteaux (cf. figure 13). Les couteaux réalisent de cette façon une réduction mécanique de la section de l'ébauche. D'autres modes d'opération peuvent également convenir pour réaliser cette réduction, notamment on peut réduire la section par un usinage mécanique ou chimique. Le moule peut aussi être conçu pour créer par pressage une seule bavure latérale qui serait découpée par un couteau logé dans une chambre de dégagement unique.

Ce mode de mise en forme permet de réduire jusqu'à 70% en section la portion 68 du fil qui devient l'âme 48 précédemment évoquée. De préférence, l'âme ainsi réalisée a une section aplatie S'2 pour donner au rayon final un profil aérodynamique. A titre indicatif, on a obtenu des résultats satisfaisants avec une ébauche dont l'épaisseur maximale de l'âme 48 est réduite à 1,5 millimètres. Un tel système de matriçage et de découpe peut être appliqué à d'autre type de produits de type filaire, tels que aiguille à tricoter par exemple.

Eventuellement on peut prévoir que du côté de la vis creuse 54 les alvéoles de matriçage forment localement des méplats 74. Cette portion à méplats 74 (section S'3) qui est visible plus particulièrement dans la figure 8 constitue une empreinte d'accouplement, elle est prévue pour bloquer l'extrémité du rayon à l'aide d'un outil lors de la rotation de la vis creuse, et ainsi réduire la torsion du rayon lors de la mise sous tension. Ceci est toutefois facultatif.

Une fois sortie du moule l'ébauche est soumise à un traitement thermique connu, dans le but d'améliorer ses propriétés mécaniques. Un tel traitement est à la portée de l'homme du métier. La longueur de l'ébauche détermine la longueur finale du rayon.

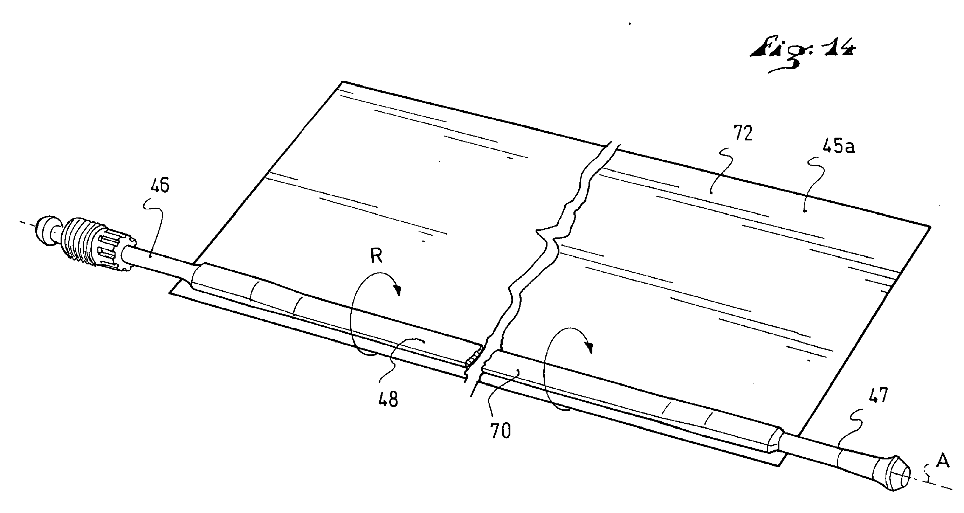

La figure 14 illustre un mode de réalisation du rayon des figures 8 et 9 à partir d'une ébauche métallique 70 réalisée conformément aux figures précédentes.

L'ébauche est placée sur une nappe 72 de fibres 45a enduite d'une matrice de résine à l'état non polymérisé, ou non totalement polymérisé. La nature et les dimensions de la nappe sont déterminées comme pour le mode de réalisation précédent.

Ensuite la nappe est roulée sur l'embauche comme une feuille de papier à cigarette sur au moins un tour (flèche R). La présence de l'âme 48 permet ici de réduire le nombre de tours et faciliter l'enroulement de la nappe de carbone. La nappe 72 couvre toute la portion de l'ébauche dont la section a été réduite et elle remonte le long de chacun des embouts 46 et 47 pour encastrer une partie de la longueur de ces embouts. On peut prévoir des variations de section et/ou des stries, celles-ci étant par exemple réalisées lors du matriçage le long de l'ébauche pour améliorer la cohésion entre l'ébauche et la matière composite. On peut également prévoir un film de colle intermédiaire entre l'ébauche et la nappe de composite pour améliorer l'adhésion entre les deux éléments.

Après cela, la nappe enroulée sur l'ébauche est placée dans un moule de cuisson comme celui évoqué à propos de la figure 7 pour réaliser la cuisson de la résine.

Le rayon ainsi réalisé est léger, rigide et résistant en traction, et à la fatigue. Il est également rigide en torsion. A titre indicatif on a réalisé de cette façon un rayon dont l'épaisseur du fourreau est de 2 millimètres sur la plus grande partie de sa longueur.

La roue à rayons selon l'invention comprend tout ou partie de ses rayons réalisés conformément aux modes de réalisation décrits.

Naturellement la présente description n'est donnée qu'à titre indicatif et l'on pourrait adopter d'autres mises en oeuvre de l'invention sans pour autant sortir du cadre de celle-ci.

En particulier les dispositifs d'accrochage à la jante et au moyeu peuvent être différents.

Egalement il serait facile de donner au fourreau un profil de section incurvé, par exemple un profil en aile d'avion ou tout autre profil en usinant les coquilles du moule de cuisson avec une forme appropriée.

## Revendications

1. Rayon pour une roue à rayons comprenant une jante (2), un moyeu central (3) et des rayons de liaison (4, 5, 6, 36) présentant un corps effilé (7, 37) prolongé à chacune de ses extrémités par une extrémité d'accrochage (8, 9, 38, 39), chacune des extrémités ayant un dispositif d'accrochage prévu pour coopérer avec un dispositif complémentaire de la jante et du moyeu, **caractérisé par le fait que** le corps effilé comprend un fourreau (15, 45) réalisé dans une matière composite, que chaque extrémité d'accrochage est la partie terminale d'un embout (16, 17, 46, 47) encastré dans le fourreau, et que les embouts (16, 17, 46, 47) sont réalisés dans un métal ayant une densité inférieure à 3 (trois).

2. Rayon selon la revendication 1, **caractérisé par le fait que** les embouts (16, 17, 46, 47) sont réalisés dans un alliage d'aluminium ou de magnésium.

3. Rayon selon les revendications 1 ou 2, **caractérisé par le fait que** les embouts (16, 17, 46, 47) ont, dans leur portion encastrée, une section transversale dont le périmètre est supérieur à 10 millimètres.

4. Rayon selon l'une des revendications précédentes, **caractérisé par le fait que** les embouts (16, 17) sont disjoints.

5. Rayon selon la revendication 4, **caractérisé par le fait que** les portions encastrées des embouts (16, 17) ont une palette (20, 21) dont l'épaisseur décroît et la largeur augmente en direction de l'extrémité de l'embout.

6. Rayon selon la revendication 5, **caractérisé par le fait que** chaque palette (20, 21) est creusée avec des stries (22a, 22b, 22c, 23a, 23b, 23c).

7. Rayon selon l'une des revendications 1 à 3, **caractérisé par le fait que** les embouts (46, 47) sont reliés par une âme (48) de section réduite.

8. Rayon selon la revendication 7, **caractérisé par le fait que** les embouts (46, 47) et l'âme (48) forment une ébauche dont la section varie de façon progressive dans les zones de transition entre les embouts et l'âme.

9. Rayon selon la revendication 7, **caractérisé par le fait que** l'âme a une section aplatie dont la section est réduite de plus de 50% par rapport à la section des embouts (46, 47).

10. Rayon selon l'une quelconque des revendications précédentes, **caractérisé par le fait que** le fourreau (15, 45) comporte des fibres unidirectionnelles noyées dans une matrice de résine.

11. Roue à rayons comprenant une jante périphérique (2), un moyeu central (3) et des rayons (4, 5) de liaison entre la jante et le moyeu, **caractérisée par le fait qu'**une partie au moins des rayons est conforme à l'une quelconque des revendications précédentes.

12. Procédé de fabrication d'un rayon comprenant un corps effilé (7, 37) prolongé par deux extrémités d'accrochage (8, 9, 38, 39), chacune des extrémités ayant un dispositif d'accrochage prévu pour coopérer avec un dispositif complémentaire de la jante et du moyeu, le corps effilé (7, 37) comprenant un fourreau (15, 45) réalisé dans une matière composite, chaque extrémité d'accrochage étant la partie terminale d'un embout (16, 17, 46, 47) encastré dans le fourreau, **caractérisé par le fait qu'**on forme le fourreau (7, 37) par enroulement d'une nappe de matière composite (25, 72) sur une ébauche de rayon (16, 17, 70).

13. Procédé selon la revendication 12, **caractérisé par le fait qu'**on forme l'ébauche avec deux embouts (16, 17) disjoints.

14. Procédé selon la revendication 13, **caractérisé par le fait qu'**on enroule sur les embouts (16, 17) une nappe (25) de matière composite dont la résine n'est pas polymérisée ou pas totalement polymérisée, et qu'on ajuste l'écartement des embouts (16, 17) au moment de la cuisson de la résine.

15. Procédé selon la revendication 12, **caractérisé par le fait qu'**on réalise une ébauche (70) qui présente dans sa partie médiane une section réduite de plus de 50% par rapport à la section des embouts (45, 46).

16. Procédé selon la revendication 15, **caractérisé par le fait qu'**on presse une ébauche brute (50) dans une matrice pour faire fluer la matière latéralement et former au moins une bavures (64, 65), puis on découpe la ou les bavures (64, 65) à l'aide d'un couteau (60, 61).

17. Procédé selon la revendication 16, **caractérisé par le fait qu'**on presse l'ébauche (50) dans un moule ayant une chambre de matriçage médiane, et au moins une chambre de dégagement, un couteau rotatif (60, 61) étant logé dans la chambre de dégagement.
